# EUROPÄISCHE PATENTANMELDUNG

(11) **EP 4 414 340 A1**
(43) Veröffentlichungstag der Anmeldung: **14.08.2024**
(21) Anmeldenummer: 24155454.2
(22) Anmeldetag: 02.02.2024
(51) Int. Cl.: C04B 28/02, C04B 20/00, C04B 32/02, C04B 24/38, C04B 40/06, C04B 103/00, C04B 14/18, C04B 14/16, C04B 14/24, C04B 14/20, C04B 14/12, C04B 14/30, C04B 16/08, C04B 14/10

(54) **KOMBINATION FÜR DIE HERSTELLUNG EINER BEWEHRTEN LAGERFUGENMÖRTELSCHICHT EINES BEWEHRTEN MAUERWERKS, DERARTIGE LAGERFUGENMÖRTELSCHICHT, BEWEHRTES MAUERWERK MIT EINER DERARTIGEN LAGERFUGENMÖRTELSCHICHT SOWIE VERFAHREN ZUR HERSTELLUNG EINER DERARTIGEN LAGERFUGENMÖRTELSCHICHT UND EINES BEWEHRTEN MAUERWERKS**

(30) Priorität: 02.02.2023 DE 102023200860
(71) Anmelder: Franken Maxit Mauermörtel GmbH & Co., 95359 Kasendorf (DE)
(72) Erfinder: Andratschke, Christin, 95359 Kasendorf (DE); Scharfe, Friedbert, 95359 Kasendorf (DE); Eberlein, Johannes, 95359 Kasendorf (DE); GROPPWEIS, Sebastian, 95359 Kasendorf (DE)
(74) Vertreter: Dr. Solf & Zapf Patent- und Rechtsanwalts PartG mbB

(57) **Zusammenfassung**

Die vorliegende Erfindung betrifft eine Kombination aus einem werksseitig angemischten Mauermörtel und einem Bewehrungstextil für die Herstellung einer bewehrten Lagerfugenmörtelschicht eines bewehrten Mauerwerks, eine derartige Lagerfugenmörtelschicht, ein bewehrtes Mauerwerk mit einer derartigen Lagerfugenmörtelschicht sowie ein Verfahren zur Herstellung einer derartigen Lagerfugenmörtelschicht und ein Verfahren zur Herstellung eines bewehrten Mauerwerks.

## Beschreibung

Die vorliegende Erfindung betrifft eine Kombination aus einem werksseitig angemischten Mauermörtel und einem Bewehrungstextil für die Herstellung einer bewehrten Lagerfugenmörtelschicht eines bewehrten Mauerwerks, eine derartige Lagerfugenmörtelschicht, ein bewehrtes Mauerwerk mit einer derartigen Lagerfugenmörtelschicht sowie ein Verfahren zur Herstellung einer derartigen Lagerfugenmörtelschicht und ein Verfahren zur Herstellung eines bewehrten Mauerwerks.

Bewehrtes Mauerwerk ist in der DIN EN 1996-1-1:2013-02 geregelt. Mit bewehrtem Mauerwerk kann ein dem Stahlbeton ähnliches Tragverhalten erzielt werden. Die Bewehrung führt unter anderem zu einer Erhöhung der Zug-, Querzug- und Biegezugtragfähigkeit des Mauerwerks.

Ein bewehrtes Mauerwerk weist bekanntermaßen Lagerfugenmörtelschichten mit einer darin eingemörtelten Lagerfugenbewehrung auf. Bei der Lagerfugenbewehrung kann es sich z.B. um ein MURFOR^{®}-Gitter, ein Lochband aus Metall oder ein Gewebe handeln. Ein MURFOR^{®}-Gitter besteht aus zwei in Längsrichtung parallel verlaufenden Drähten, die mit einem diagonal verlaufenden dünneren Draht verschweißt sind. Es kann aus korrosionsschutzgründen epoxidharzbeschichtet sein.

Zur Herstellung der Lagerfugenmörtelschichten in einem Mauerwerk wird zudem in an sich bekannter Weise ein Mauermörtel verwendet. Die Anforderungen an Mauermörtel sind in der DIN EN 998-2:2017-02 festgelegt. Und die Anwendung von Mauermörtel in Bauwerken ist in der DIN 20000-412:2019-06 geregelt.

Üblicherweise handelt es sich bei den Mauermörteln um werksseitig vorgemischte Trockenmörtelmischungen (Werk-Trockenmörtel). Trockenmörtelmischungen sind vorfabrizierte Trockenmischungen (sogenannte Werkmörtel), bestehend aus zumindest einem mineralischen Bindemittel, zumindest einem Zuschlagstoff, in der Regel zumindest einem Zusatzstoff und/oder zumindest einem Zusatzmittel, die auf der Baustelle nur noch mit Wasser zu einem Frischmörtel angerührt werden müssen und damit gebrauchsfertig sind.

Zusatzstoffe sind fein verteilte Stoffe, die bestimmte Eigenschaften des Mörtels beeinflussen. Sie beeinflussen vorrangig die Verarbeitbarkeit des Frisch- und die Festigkeit und Dichtigkeit des Festmörtels. Im Gegensatz zu Zusatzmitteln ist die Zugabemenge im Allgemeinen so groß, dass sie bei der Stoffraumrechnung zu berücksichtigen ist. Zusatzstoffe dürfen das Erhärten des Zementes sowie die Festigkeit und Dauerhaftigkeit des Mörtels nicht beeinträchtigen. Bei den Zusatzstoffen wird unterschieden zwischen inaktiven (inerten) Zusatzstoffen und aktiven Zusatzstoffen, insbesondere puzzolanischen Zusatzstoffen und latent hydraulischen Zusatzstoffen, und organischen Zusatzstoffen. Inerte Zusatzstoffe reagieren nicht oder höchstens oberflächlich mit dem Bindemittel. Im Rahmen der Erfindung werden die aktiven Zusatzstoffe dem Bindemittelanteil zugerechnet, sofern sie zur Ausbildung der Bindemittelmatrix beitragen. Dies gilt auch für Erstarrungsregler. Auch diese werden dem Bindemittelanteil zugerechnet.

Zusatzstoffe sind z.B. in der DIN EN 12620:2015-07 "Natürliche Gesteinsmehle" oder der DIN EN 15167-1 :2006-12 "Hüttensandmehl zur Verwendung in Beton, Mörtel und Einpressmörtel" genormt. Zusatzstoffe gehören zum Mehlkornanteil des Mörtels. Als Mehlkorn bzw. Mehl werden im Rahmen der Erfindung alle Körnungen bezeichnet, deren Korngröße ≤ 0,125 mm beträgt.

Zuschlagstoffe sind ebenfalls inert und gröber als Zusatzstoffe. Sie bestehen somit nicht ausschließlich aus Mehlkorn, können aber einen Mehlkornanteil aufweisen. Unter Zuschlagstoffen (Gesteinskörnung) versteht man ein körniges Material für die Verwendung im Bauwesen. Gesteinskörnungen werden nach ihrer Herkunft, ihrem Gefüge, der Korngröße sowie der Kornrohdichte eingeteilt und können natürlich, industriell hergestellt oder rezykliert sein. Grundsätzlich unterscheidet man anhand der Kornrohdichte ρ_{Rg}, bestimmt nach DIN EN 1097-6:2022-05, zwischen Leichtzuschlag (leichter Gesteinskörnung) (ρ_{Rg} < 2000 kg/m³), Normalzuschlag (normaler Gesteinskörnung) (ρ_{Rg} = 2000-3000 kg/m³) und Schwerzuschlag (schwerer Gesteinskörnung) (ρ_{Rg} > 3000 kg/m³).

Unterschieden wird zudem zwischen geschlossenporigen leichten Gesteinskörnungen (geschlossenporiger Leichtzuschlag) wie Blähton und Blähglas mit geschlossenporigen Leichtzuschlagkörnern und offenporigen leichten Gesteinskörnungen (offenporiger Leichtzuschlag) wie Bims, Vermiculit und Blähperlit mit offenporigen Leichtzuschlagkörnern wie folgt: Die durch einen Bläh- bzw. Sinterprozess hergestellten geschlossenporigen Leichtzuschlagkörner weisen im Inneren ein stark vernetztes Porensystem und eine vergleichsweise dichte Sinterhaut auf. Die Sinterhaut weist kapillar hoch aktive Sinterporen mit einem Durchmesser von ca. 0,01 bis 40 µm auf. Auch geschlossenporige Leichtzuschlagkörner sind also an der Kornoberfläche nicht vollständig geschlossen. Geschlossenporige Leichtzuschlagkörner saugen am Anfang sehr schnell. Dann nimmt die Wasseraufnahme mit der Zeit stark ab. Offenporige Leichtzuschlagkörner hingegen weisen eine gleichmäßig verteilte, hohe Porosität über den gesamten Kornquerschnitt auf. Sie besitzen ein sehr hohes kapillares Saugvermögen und sind innerhalb weniger Sekunden bis Minuten wassergesättigt.

Zusatzmittel werden dem Trockenmörtel zugesetzt, um durch chemische oder physikalische Wirkung oder durch beides die Eigenschaften des Frisch- oder Festmörtels - wie z.B. Verarbeitbarkeit, Erstarren, Erhärten oder Frostwiderstand - zu beeinflussen. Zusatzmittel werden in so geringen Mengen zugegeben (< 5 M.-% des Zementanteils), dass sie als Raumanteil des Mörtels ohne Bedeutung sind. Zusatzmittel werden flüssig, pulverförmig oder als Granulat geliefert. In Trockenmörtelmischungen sind sie pulverförmig oder als Granulat enthalten. Zusatzmittel für Mörtel sind z.B. in der DIN EN 934-2:2012-08 "Zusatzmittel für Beton, Mörtel und Einpressmörtel" genormt.

Zudem existieren unterschiedliche Mauermörtelarten:
Vormauermörtel wird z.B. für die Vormauerung wie Verblender, Sichtmauerwerk oder Sichtfugen eingesetzt.

Hintermauermörtel wird meist als der eigentliche Mauermörtel bezeichnet, da dieser im eigentlichen Mauerwerk zur Vermörtelung der Stoß- und Lagerfugen verwendet wird.

Dünnbettmörtel wird für Plansteine, z.B. Planziegel, verwendet, also bei Mauersteinen, die eine geringe Maßabweichung in der Steinhöhe aufweisen. Dünnbettmörtel wird in der Regel in einer Fugendicke von 1-3 mm verarbeitet.

Leichtmauermörtel enthält Leichtzuschläge wie z.B. Perlite, Blähton, Blähglas oder Bims. Die Trockenrohdichte von Leichtmauermörtel beträgt < 1,3 kg/dm³. Leichtmauermörtel wird gemäß DIN EN 998-2:2017-02 und DIN 20000:412-2019-06 aufsteigend nach seiner Festigkeit in unterschiedliche Mörtelgruppen eingeteilt.

Bei der Verarbeitung von Hintermauerwerk im Außenwandbereich wird sehr oft Dünnbettmörtel verwendet, welcher in Stärken von 1 bis 3 mm verarbeitet wird. Nur Fliesen, Platten, Mauersteine und Planelemente mit Maßabweichungen von unter 1 mm sind in der Regel zur Vermauerung mit Dünnbettmörtel geeignet. In die Dünnbettmörtelfuge kann ein Gewebeflies zur Verbesserung der Deckelung bei Lochsteinen eingearbeitet werden.

Die DE 20 2015 005 729 U1 offenbart ein zumindest dreischaliges Mauerwerk, wobei das Mauerwerk aus mehreren nebeneinander und übereinander angeordneten Mauersteinen aufgebaut ist, welche jeweils zumindest dreischichtig ausgebildet sind. Die nebeneinander angeordneten Mauersteine bilden jeweils eine horizontale Steinreihe, wobei das Mauerwerk mehrere übereinander angeordnete Steinreihen aufweist und zwischen zwei übereinander angeordneten Steinreihen jeweils eine durchgehende, horizontale Lagerfuge vorhanden ist und die übereinander angeordneten Mauersteine mittels eines in der Lagerfuge angeordneten Lagerfugenmörtels miteinander vermörtelt sind. Pro Lagerfuge weist das Mauerwerk zudem jeweils zumindest eine textile Armierungsmatte, vorzugsweise ein Armierungsgewebe auf, welche in den Lagerfugenmörtel eingebettet ist.

Die Armierungsmatten weisen eine Mindestzugfestigkeit in Steindickenrichtung von ≥ 0,4 kN/5cm, bevorzugt ≥ 0,75 kN/5cm, gemäß DIN EN ISO 13934-1 :2013-08 und/oder eine Zugfestigkeit in Steindickenrichtung von 0,4 bis 50 kN/5cm, bevorzugt 0,5 bis 20 kN/5cm, gemäß DIN EN ISO 13934-1 :2013-08 auf. Zudem bestehen die Armierungsgewebe vorzugsweise aus alkaliresistenten Fasern, bevorzugt aus alkaliresistenten Glasfasern und/oder aus organisch beschichteten Fasern, bevorzugt organisch beschichteten alkaliresistenten Glasfasern, insbesondere mit einer Beschichtung aus Styrolbutadien oder Epoxidharz und/oder aus Naturfasern, wie z.B. Kokosfasern, Wollfasern, Baumwollfasern, Hanffasern und/oder Seidefasern und/oder aus, insbesondere organisch beschichteten, mineralischen Fasern, wie z.B. Basaltfasern, Asbestfasern, Woolastonitfasern und/oder Erionitfasern und/oder aus organischen Fasern, wie z.B. Carbonfasern, Polyesterfasern, Polyamidfasern, Aramidfasern, Polyacrylnitrilfasern, Viskosefasern und/oder Zellulosefasern und/oder aus metallischen Fasern, wie z.B. Stahlfasern.

Besonders vorteilhaft wird im Rahmen der DE 20 2015 005 729 U1 zudem zum Vermörteln der Mauersteine in der Lagerfuge eine Trockenmörtelplatte gemäß der DE 10 2013 007 800 A1 verwendet. Die DE 10 2013 007 800 A1 offenbart eine Trockenmörtelplatte aufweisend zumindest eine Trockenmörtelschicht, wobei die Trockenmörtelschicht eine mittels eines wasserlöslichen Klebemittels verfestigte Trockenmörtelmischung aufweist, wobei die Trockenmörtelmischung aus einem mineralischen, insbesondere hydraulischen, Bindemittel, Zuschlag und gegebenenfalls zumindest einem Zusatzstoff und/oder zumindest einem Zusatzmittel besteht. Zudem weist die Trockenmörtelmischung bezogen auf die Trockenmasse der Trockenmörtelmischung 5 bis 35 Gew.-%, bevorzugt 10 bis 25 Gew.-%, Leichtzuschlag aus offenporigen und/oder geschlossenporigen Leichtzuschlagkörnern auf. Die Trockenmörtelplatte weist zudem vorzugsweise ein Trägerband auf, das einseitig mit zumindest einer derartigen Trockenmörtelschicht abgedeckt ist. Bei dem, insbesondere rechteckigen, Trägerband handelt es sich um ein, insbesondere textiles, Flächengebilde. Vorzugsweise handelt es sich bei dem Trägerband um ein Gewebe und/oder Gewirke und/oder ein Vlies und/oder ein Gestricke. Das Trägerband besteht vorzugsweise aus Baumwollfasern und/oder Polyesterfasern und/oder Glasfasern und/oder Carbonfasern und/oder Basaltfasern.

Des Weiteren weist die Trockenmörtelmischung vorzugsweise als Zusatzmittel ein Polysaccharid-Verdickungsmittel und einen mineralischen Verdicker gemäß der DE 199 16 117 A1 auf, um nach dem Anmachen eine folienartige Konsistenz des Frischmörtels zu erhalten.

Die DE 199 16 117 A1 offenbart einen Trockenmörtel zur deckelnden Dünnbettvermörtelung von Hochlochplanziegeln enthaltend ein Gemenge aus mindestens einem, insbesondere hydraulischen, mineralischen Bindemittel, insbesondere Portlandzement, und mindestens einem Leichtzuschlagstoff. Das Gemenge enthält als Zusatzmittel mindestens ein Polysaccharid-Verdickungsmittel in Kombination mit mindestens einem aktivierten mineralischen Verdicker in Mengen, die nach dem Anmachen des Trockenmörtels mit Wasser eine folienartig selbsttragende klebrige Konsistenz eines Frischmörteldünnbettauftrags ergeben.

"Gedeckelt" bzw. "deckelnd" bedeutet, dass eine die Hochlöcher der Hochlochplanziegel abdeckende, durchgehende Mörtelschicht erzeugt wird.

Die DE 20 2018 003 356 U1 offenbart ein Gelege aus Carbon-Roving als Armierung für Mörtel und Beton-Ausgleichsringe, wobei ein Carbon-Roving manuell über eine Vorrichtung oder seriell über eine Maschine zu einem runden Carbongelege gewickelt wird, welches anschließend in einem oder mehreren Arbeitsgängen mit Kunststofflösungen imprägniert wird, damit es den mechanischen Beanspruchungen von Mörtel und Beton standhält und die gewünschte Festigkeit für ein gutes Handling bekommt. Die geometrische Figur des Carbongeleges ist eine Optimierung aus Kraftlinien, kurzer Rovinglänge und einfacher Herstellung. Sie ist je nach Verwendung flach bis leicht konisch. Die fertigen Carbongelege können werks- und baustellenseitig verwendet werden. Das Carbongelege wird insbesondere auf der Baustelle zur Armierung des frischen Mörtels zwischen den einzelnen Bauteilen eines Schachtkopfs angewendet. Es soll dadurch die Druck- und Erosionsfestigkeit erhöht werden.

Aufgabe der vorliegenden Erfindung ist die Bereitstellung einer Kombination aus einem werksseitig angemischten Mauermörtel, insbesondere einem Dünnbettmauermörtel, und einem textilen Flächengebilde für die Herstellung einer bewehrten Lagerfugenmörtelschicht eines bewehrten Mauerwerks, die eine hohe Erdbebensicherheit des Mauerwerks gewährleistet, sowie deren Verwendung.

Weitere Aufgaben sind die Bereitstellung einer derartigen Lagerfugenmörtelschicht, eines bewehrten Mauerwerks mit einer derartigen Lagerfugenmörtelschicht sowie eines Verfahrens zur Herstellung einer derartigen Lagerfugenmörtelschicht und eines Verfahrens zur Herstellung eines derartigen bewehrten Mauerwerks.

Diese Aufgaben werden durch eine Kombination gemäß Anspruch 1, eine Lagerfugenmörtelschicht gemäß Anspruch 13, ein bewehrtes Mauerwerk gemäß Anspruch 14, eine Verwendung gemäß Anspruch 15, sowie ein Verfahren zur Herstellung einer derartigen Lagerfugenmörtelschicht gemäß Anspruch 16 und ein Verfahren zur Herstellung eines derartigen bewehrten Mauerwerks gemäß Anspruch 17 gelöst. Vorteilhafte Weiterbildungen der Erfindung sind in den sich anschließenden Unteransprüchen gekennzeichnet.

Im Folgenden wird die Erfindung anhand einer Zeichnung beispielhaft näher erläutert. Es zeigen:
- Figur 1:: Schematisch eine Seitenansicht eines Teils eines Mauerwerks
- Figur 2:: Schematisch eine weitere, etwas detailliertere geschnittene Seitenansicht eines Teils eines Mauerwerks
- Figur 3:: Schematisch eine Draufsicht auf ein erfindungsgemäßes Bewehrungstextil

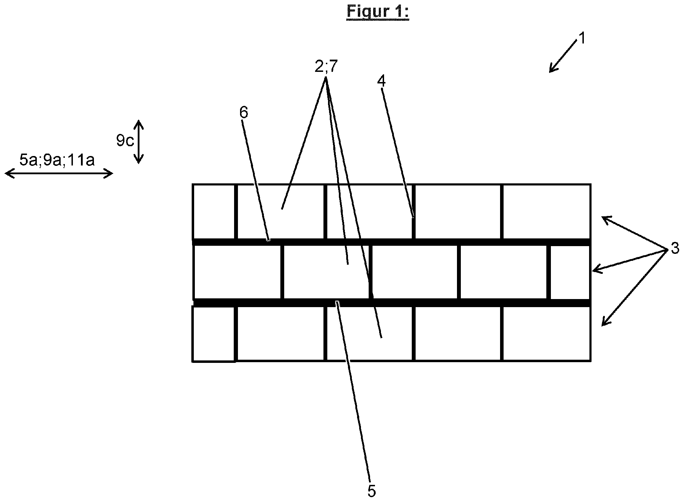

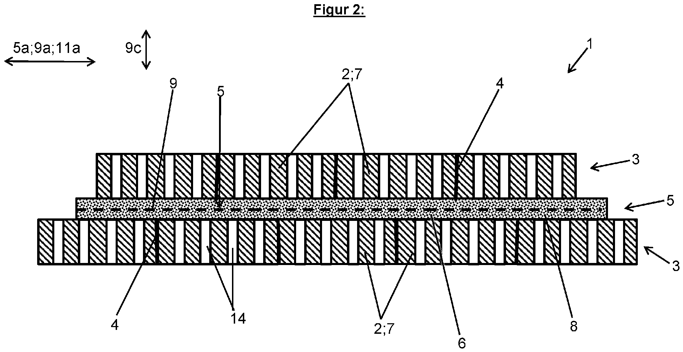

Das erfindungsgemäße Mauerwerk 1 (Fig. 1,2) ist in an sich bekannter Weise aus mehreren Mauersteinen 2 aufgebaut, welche nebeneinander und übereinander angeordnet sind. Die nebeneinander angeordneten Mauersteine 2 bilden jeweils eine horizontale Steinreihe 3, wobei zwischen zwei nebeneinander angeordneten Mauersteinen 2 jeweils eine vertikale Stoßfuge 4 vorhanden ist. Die nebeneinander angeordneten Mauersteine 2 sind vorzugsweise nicht miteinander vermörtelt, sondern lediglich auf Stoß aneinandergesetzt. Sie können aber auch miteinander vermörtelt sein.

Zur Ausbildung des Mauerwerks 1 sind jeweils mehrere Steinreihen 3 übereinander angeordnet, wobei zwischen zwei übereinander angeordneten Steinreihen 3 jeweils eine durchgehende, horizontale Lagerfuge 5 vorhanden ist. Vorzugsweise sind dabei in an sich bekannter Weise die Stoßfugen 4 der übereinander angeordneten Steinreihen 3 in horizontaler Richtung zueinander versetzt, so dass sie in vertikaler Richtung nicht zueinander fluchtend sind. Die übereinander angeordneten Mauersteine 2 sind mittels einer in der Lagerfuge 5 angeordneten Lagerfugenmörtelschicht 6 miteinander vermörtelt.

Vorzugsweise handelt es sich bei den Mauersteinen 2 um Plansteine, bevorzugt Planlochsteine, insbesondere um Ziegel, vorzugsweise um Hochlochziegel 7 mit Hochlöchern 14, und/oder um Kalksandsteine und/oder um Kalkblocksteine und/oder um Betonsteine und/oder Porenbetonsteine und/oder Leichtbetonsteine.

Die Mauersteine 2 können zudem auch mehrschalig ausgebildet sein. In diesem Fall weisen sie vorzugsweise einen tragenden Stein, vorzugsweise einen der oben genannten Steine, und eine Dämmschicht und gegebenenfalls weitere Schicht(en) auf.

Die Lagerfugenmörtelschicht 6 besteht aus einer Lagerfugenmörtelmatrix 8 aus einem erhärteten erfindungsgemäßen Lagerfugenmörtel, in die ein Bewehrungstextil bzw. eine textile Bewehrung 9 in Form eines textilen Flächengebildes eingebettet bzw. eingemörtelt ist.

Wie bereits erläutert, führt das Bewehrungstextil 9 insbesondere zu einer Erhöhung der Zug-, Querzug- und Biegezugtragfähigkeit des Mauerwerks 1. Dabei sind das Bewehrungstextil 9 und die Rezeptur des Lagerfugenmörtels erfindungsgemäß aufeinander abgestimmt, um eine möglichst gute Verankerung des Bewehrungstextils 9 in der Lagerfugenmörtelmatrix 8 zu gewährleisten.

Das Bewehrungstextil 9 weist in an sich bekannter Weise eine erste und eine dazu senkrechte Flächenrichtung 9a;b sowie eine zu den beiden Flächenrichtungen 9a;b senkrechte Höhen- bzw. Dickenrichtung 9c auf.

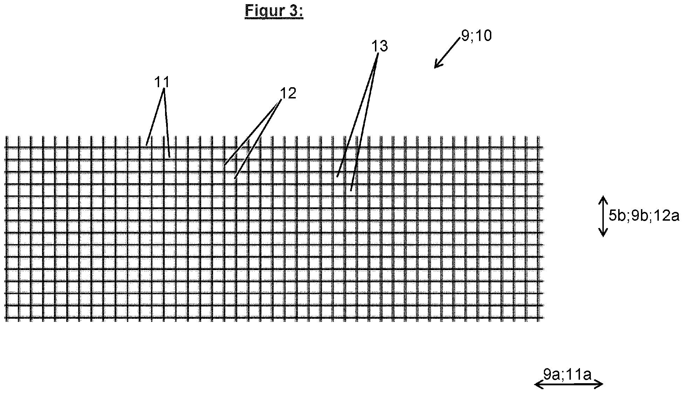

Des Weiteren handelt es sich bei dem Bewehrungstextil 9 erfindungsgemäß um ein Gelege bzw. Fadengelege 10 (non-crimp fabric (NCF)) (Fig. 3) oder ein Gewebe. Besonders bevorzugt handelt es sich um ein Gelege 10.

Das Bewehrungstextil 9 weist zudem vorzugsweise eine geringe Dicke (=Erstreckung in Dickenrichtung 9c) auf. Vorzugsweise beträgt die Dicke des Bewehrungstextils 9 0,04 bis 1,0 mm, bevorzugt 0,06 bis 0,5 mm.

Das Gelege 10 besteht in an sich bekannter Weise aus einer oder mehreren Fadenlagen von parallel verlaufenden, gestreckten Gelegefäden 11;12. Vorzugsweise weist das Gelege 10 zwei Fadenlagen auf (Fig. 3). Die einzelnen Fadenlagen liegen vorzugsweise aneinander an. Sie können aber, zumindest teilweise, auch voneinander beabstandet sein. Hierzu sind dann vorzugsweise in an sich bekannter Weise Abstandsfäden vorhanden.

Die einzelnen Fadenlagen eines Geleges 10 unterscheiden sich bekannterma-ßen in der Fadenorientierung, wobei die Ausrichtung bzw. Fadenorientierung mit einem Winkel zur Produktionsrichtung angegeben wird. Die Produktionsrichtung wird dabei als 0°-Lage bezeichnet.

Vorzugsweise besteht das Gelege 10 aus einer Kettfädenlage aus Kettfäden 11 und einer Schussfädenlage aus die Kettfäden 11 senkrecht kreuzenden Schussfäden 12. Die Kettfäden 11 erstrecken sich parallel zur ersten Flächenrichtung 9a und die Schussfäden 12 erstrecken sich parallel zur zweiten Flächenrichtung 9b. Die erste Flächenrichtung 9a entspricht somit einer Kettrichtung 11a und die zweite Flächenrichtung 9b entspricht somit einer Schussrichtung 12a des Fadengeleges 10. Das Gelege 10 ist somit vorzugsweise zweilagig ausgebildet.

Und das Gelege 10 ist vorzugsweise biaxial ausgebildet. Biaxial bedeutet, dass zwei Lagen von jeweils parallelen Fäden 11;12 vorhanden sind, wobei sich die Gelegefäden 11;12 der beiden Lagen in zwei verschiedene Richtungen erstrecken.

Zudem erstrecken sich die Kettfäden 11 vorzugsweise in Produktionsrichtung bzw. 0°-Richtung. Und die Schussfäden 12 erstrecken sich entsprechend in 90°-Richtung.

Außerdem weist das Gelege 10 vorzugsweise eine Gitterstruktur (Fig. 3) mit Gitteröffnungen 13 auf.

Das Gelege 10 kann aber auch mehr als zwei Fadenlagen aufweisen. In diesem Fall kann es biaxial oder multiaxial ausgebildet sein. Multiaxial bedeutet, dass mindestens 3 Lagen von jeweils parallelen Fäden 11;12 vorhanden sind, wobei sich die Gelegefäden 11;12 der Lagen in mindestens drei verschiedene Richtungen (Fadenorientierung) erstrecken.

Vorzugsweise weist das Gelege 10 2 bis 8, bevorzugt 2 bis 4, Fadenlagen auf.

Des Weiteren sind die Gelegefäden 11;12 der einzelnen Fadenlagen an den Kreuzungspunkten vorzugsweise aneinander fixiert. Bevorzugt sind die Gelegefäden 11;12 mechanisch, bevorzugt mittels Verbindungsfäden bzw. Bindefäden fixiert. Beispielsweise bilden die Bindefäden in an sich bekannter Weise Maschen aus. Es handelt sich insbesondere um Näh- oder Wirkfäden. Die einzelnen Fadenlagen sind also insbesondere miteinander verwirkt und/oder verstrickt und/oder vernäht.

Die Fixierung kann aber auch zusätzlich oder alternativ durch Stoffschluss, bevorzugt durch Verkleben, oder andere Verbindungsarten erfolgen. Beispielsweise können die Gelegefäden 11;12 der einzelnen Fadenlagen an den Kreuzungspunkten mittels Klammern aneinander fixiert werden.

Bei den Gelegefäden 11;12 handelt es sich jeweils in an sich bekannter Weise um Multifilamentfäden. Multifilamentfäden bestehen aus einem Bündel aus Monofilamenten. Monofilamentfäden bestehen dagegen jeweils aus einem einzigen Monofilament. Die Monofilamente sind jeweils (monolithisch) ausgebildet. Zudem weisen sie in an sich bekannter Weise vorzugsweise eine Schlichte auf.

Vorzugsweise handelt es sich bei den Gelegefäden 11; 12 um Rovings. Bei Rovings handelt es sich um Multifilamentfäden aus parallel angeordneten Monofilamenten. Vorzugsweise handelt es sich um Rovings der Form 1K bis 100K, bevorzugt 6K bis 24K (1K=1000 Monofilamente).

Erfindungsgemäß besteht das Bewehrungstextil 9, insbesondere das Gelege 10 zudem aus Carbon. Das heißt die Gelegefäden 11;12 bzw. die Monofilamente bestehen aus Carbon.

Zudem weisen die sich in Kettrichtung 11a erstreckenden Gelegefäden 11, insbesondere die Multifilamentfäden, vorzugsweise eine Zugfestigkeit von 500 bis 6000 N/mm², bevorzugt von 2500 bis 3800 N/mm² auf. Und/oder die sich in Schussrichtung 12a erstreckenden Gelegefäden 12, insbesondere die Multifilamentfäden, weisen vorzugsweise eine Zugfestigkeit von 500 bis 6000 N/mm², bevorzugt von 2500 bis 3800 N/mm² auf.

Außerdem weisen die sich in Kettrichtung 11a erstreckenden Gelegefäden 11, insbesondere die Multifilamentfäden, vorzugsweise einen Querschnitt von 0,11 bis 3,9 mm², bevorzugt von 0,23 bis 0,9 mm² auf. Und/oder die sich in Schussrichtung 12a erstreckenden Gelegefäden 12, insbesondere die Multifilamentfäden, weisen vorzugsweise einen Querschnitt von 0,11 bis 3,9 mm², bevorzugt von 0,23 bis 0,9 mm² auf.

Des Weiteren weisen die Gelegefäden 11;12 vorzugsweise einen flach rechteckigen oder elliptischen Querschnitt auf. Sie können aber auch einen runden Querschnitt oder anderen polygonen Querschnitt aufweisen. Dies vom runden Querschnitt abweichende Form verbessert die mechanische Verankerung der Gelegefäden 11;12 in der Lagerfugenmörtelmatrix 8. Auch wird eine gleichmäßige Krafteinleitung gewährleistet. Ein abgeflachter Querschnitt (die Gelegefäden 11;12 sind also breiter als hoch bzw. dick) hat zudem den Vorteil, dass die Lagerfugenmörtelschicht 6 dünner ausgebildet sein kann (Dünnbettmörtel).

Zudem weisen die sich in Kettrichtung 11a erstreckenden Gelegefäden 10, insbesondere die Multifilamentfäden, vorzugsweise eine Feinheit von 67 bis 3500 tex, bevorzugt von 800 bis 1600 tex auf. Und/oder die sich in Schussrichtung 12a erstreckenden Gelegefäden 10, insbesondere die Multifilamentfäden, weisen vorzugsweise eine Feinheit von 67 bis 3500 tex, bevorzugt von 800 bis 1600 tex auf.

Des Weiteren weist das Bewehrungstextil 9 vorzugsweise ein Flächengewicht von 10 bis 1000 g/m², bevorzugt 100 bis 350 g/m², gemäß DIN EN 12127:1997-12 auf.

Außerdem weist das Bewehrungstextil 9 vorzugsweise einen Bewehrungsquerschnitt von 8 bis 140 mm²/m, bevorzugt 15 bis 70 mm²/m, in Kettrichtung 11a und/oder einen Bewehrungsquerschnitt von 8 bis 140 mm²/m, bevorzugt 15 bis 70 mm²/m, in Schussrichtung 12a auf.

Das gitterartige Gelege 10 weist außerdem vorzugsweise eine Gitteröffnungsbreite von 3 bis 50 mm, bevorzugt 6 bis 15 mm, in Kettrichtung 11a und/oder eine Gitteröffnungsbreite von 3 bis 50 mm, bevorzugt 6 bis 15 mm, in Schussrichtung 12a auf. Die Gitteröffnungsbreite in Kettrichtung 11a und in Schussrichtung 12a sind dabei identisch oder unterschiedlich.

Erfindungsgemäß weist das Bewehrungstextil 9 zudem eine die Gelegefäden 10 umhüllende und durchdringende Textilausrüstung in Form einer Imprägnierung aus einem Polymer auf.

Eine Textilausrüstung verändert - im Gegensatz zu einer Textilbeschichtung - die physikalischen Eigenschaften, jedoch nicht den visuellen Eindruck eines Textils. Eine Textilausrüstung umhüllt und gegebenenfalls durchdringt nur die einzelnen Fäden, wobei die Poren und insbesondere die Gitteröffnungen des Textils nicht geschlossen werden und eine Gasdurchlässigkeit erhalten bleibt. Die Struktur des Textils wird also nicht verändert.

Im Falle der erfindungsgemäßen Imprägnierung sind die einzelnen Gelegefäden 11;12 des Bewehrungstextils 9 durchdrungen bzw. durchtränkt. Dadurch wird zum einen ein guter Verbund der einzelnen Monofilamente eines Gelegefadens 11;12 miteinander gewährleistet. Dies gewährleistet wiederum, dass die Krafteinleitung in den erhärteten Lagerfugenmörtel über den gesamten Querschnitt erfolgt. Gelegefäden 11;12 mit einem abgeflachten Querschnitt können dabei besonders gut durchtränkt werden.

Zudem wird auch die Verbindung der einzelnen sich kreuzenden Gelegefäden 11;12 miteinander verbessert. Es kann sogar ausreichend sein, dass keine Bindefäden oder andere Verbindungsmittel mehr notwendig sein, sondern die Verbindung nur mittels der Imprägnierung erfolgt.

Die Imprägnierung besteht zudem vorzugsweise aus einer erhärteten Polymerdispersion.

Als Polymerdispersion oder auch Polymerlatex bezeichnet man eine kolloidal stabile Dispersion von Polymerpartikeln in Wasser und/oder einem Lösemittel.

Polymerdispersionen haben die Fähigkeit beim Eintrocknen einen durchgehenden Film zu bilden. Beim Verdunsten des Wassers/Lösemittels rücken die Partikel zunehmend enger zusammen, bis schließlich die zwischen den Partikeln wirkenden Kapillarkräfte so groß werden, dass die Abstoßung durch Tenside oder Schutzkolloide überwunden wird und sich die Teilchen berühren. Sind die Partikel ausreichend verformbar, so werden sie durch die wirkenden Kräfte deformiert und verschmelzen schließlich zu einem durchgehenden Polymerfilm.

Vorzugsweise besteht die erhärtete Polymerdispersion aus Polystyrol und/oder Styrolbutadien-Kautschuk und/oder Acrylat.

Vorzugsweise besteht die erhärtete Polymerdispersion aus einem bio-basierten Polymer. Als bio-basierte Kunststoffe werden allgemein Kunststoffe bezeichnet, die auf Basis nachwachsender Rohstoffe erzeugt werden.

Vorzugsweise besteht die erhärtete Polymerdispersion aus einem Thermoplast.

Die Imprägnierung kann aber auch aus einem erhärteten Harz, bevorzugt Kunstharz, vorzugsweise aus Epoxidharz und/oder Vinylesterharz und/oder Polyurethanharz und/oder Acrylharz, bestehen. Bei dem Harz handelt es sich vorzugsweise um einen Duroplast.

Vorzugsweise handelt es sich um ein bio-basiertes Harz. Denn dieses ist durch eine besondere Geschmeidigkeit, Elastizität und Biegsamkeit charakterisiert ist. Dadurch lässt sich das Bewehrungstextil 9 formbar in die Frischmörtelschicht einlegen.

Wie bereits erläutert, sind das Bewehrungstextil 9 und der Lagerfugenmörtel derart aufeinander abgestimmt, dass sich im eingebauten Zustand ein optimaler Verbund zwischen Bewehrungstextil 9 und dem erhärteten, also hydratisierten bzw. abgebundenen Lagerfugenmörtel ergibt.

Dazu weist der trockene Lagerfugenmörtel eine Bindemittelkomponente mit zumindest einem mineralischen, insbesondere hydraulischen, Bindemittel, sowie zumindest einen Leichtzuschlagstoff, zumindest ein Polysaccharid-Verdickungsmittel und zumindest ein mineralisches Verdickungsmittel sowie gegebenenfalls zumindest einen Zusatzstoff und/oder gegebenenfalls zumindest ein weiteres Zusatzmittel auf. Des Weiteren weist der trockene Lagerfugenmörtel hierzu eine speziell abgestimmte, erfindungsgemäße Sieblinie bzw. Kornverteilung, insbesondere des Feinkornanteils des Leichtstoffanteils des Lagerfugenmörtels auf.

Bei dem Feinkornanteil handelt es sich um den Anteil mit einer Korngröße ≤ 90 µm.

Der Leichtstoffanteil wird gebildet aus allen Leichtstoffen des Lagerfugenmörtels mit einer Schüttdichte < 0,4 kg/dm³ gemäß DIN EN 459-2:2021-09.

Bzw. der Leichtstoffanteil weist zumindest einen Leichtstoff mit einer Schüttdichte < 0,4 kg/dm³ gemäß DIN EN 459-2:2021-09 auf.

Es kann sich also bei einem Leichtstoff um einen Leichtzuschlag und/oder einen leichten Zusatzstoff handeln.

Der Leichtstoffanteil umfasst wie erläutert alle Leichtstoffe (=Schüttdichte < 0,4 kg/dm³ gemäß DIN EN 459-2:2021-09) des Lagerfugenmörtels, wobei der Lagerfugenmörtel zumindest einen Leichtzuschlagstoff, aufweist.

Die den Lagerfugenmörtel betreffenden Mengenangaben beziehen sich, falls nicht anders angegeben, immer auf die Trockenmasse des Lagerfugenmörtels, auch wenn dies nicht explizit erwähnt ist.

Zudem werden Korngrößen(verteilungen), falls nicht anders angegeben, immer durch Bestimmung des Siebdurchgangs gemäß DIN EN 933-10-2009-10 und DIN EN 1015-1 :2007-05 ermittelt, auch wenn dies nicht explizit erwähnt ist. Die feinen Bestandteile < 90 µm und < 200 µm werden dabei durch Absiebung mittels Luftstrahlsiebung gemäß DIN EN 933-10:2009-10 ermittelt und abgetrennt und die übrigen Bestandteile werden anschließend gemäß DIN EN 1015-1 :2007-05 gesiebt.

In Abweichung davon wird der Feinkornanteil des Lagerfugenmörtels und des Leichtstoffanteils zur Bestimmung seiner Kornverteilung zunächst mittels Handsiebung gemäß TGL 20 801 aus 1969, Blatt 20, auf einem 90 µm Sieb abgesiebt. Dazu werden jeweils 100 g des Ausgangsmaterials (also des Lagerfugenmörtels oder des Leichtstoffanteils) verwendet. Anschließend wird mittels Laserlichtbeugung gemäß ISO 13320:2020-01 (insbesondere mit Nassdispergierung in Isopropanol) der jeweilige dₓ-Wert bestimmt.

Erfindungsgemäß weist der Feinkornanteil des Leichtstoffanteils des Lagerfugenmörtels einen d₅₀-Wert von 358 bis 60 µm, bevorzugt 40 bis 55 µm und/oder einen d₉₀-Wert von 65 bis 90 µm, bevorzugt 65 bis < 90 µm, besonders bevorzugt 65 bis 89 µm, ganz besonders bevorzugt 70 bis 85 µm, auf.

Zudem beträgt die Menge des Feinkornanteils im Leichtstoffanteil, bestimmt durch Absiebung mittels Luftstrahlsiebung gemäß DIN EN 933-10:2009-10, vorzugsweise 1 bis 20 M.-%, bevorzugt 3 bis 18 M.-%.

Vorzugsweise weist außerdem der Feinkornanteil des Lagerfugenmörtels einen d₅₀-Wert von 7 bis 20 µm, bevorzugt 10 bis 18 µm, besonders bevorzugt von 11 bis 15 µm und/oder einen d₉₀-Wert von 25 bis 55 µm, bevorzugt 28 bis 50 µm, besonders bevorzugt von 30 bis 45 µm auf.

Zudem beträgt die Menge des Feinkornanteils im Lagerfugenmörtel, bestimmt durch Absiebung mittels Luftstrahlsiebung gemäß DIN EN 933-10:2009-10, vorzugsweise 75 bis 96 M.-%, bevorzugt 78 bis 95 M.-%.

Vorzugsweise weist der Leichtzuschlag zudem eine maximale Korngröße ≤ 3, mm, bevorzugt ≤ 2 mm, besonders bevorzugt ≤ 1 mm, auf.

Vorzugsweise weist der Leichtzuschlag zudem folgende Korngrößenverteilung auf, ermittelt anhand des Siebdurchgangs gemäß DIN EN 933-10:2009-10 und DIN EN 1015-1:2007-05 (die einzelnen Komponenten addieren sich zu 100 M.-%):

| | **[M.-%]** | |
|---|---|---|
| **Korngrößen** | | **vorzugsweise** |
| **≤ 0,09 mm** | 2-20 | 2-15 |
| **> 0,09 - 0,2 mm** | 2-20 | 2-15 |
| **> 0,2** - **0,63 mm** | 60 - 90 | 70-90 |
| **> 0,63 - 1,0 mm** | 0-15 | 0-10 |
| **> 1,0 mm** | 0-10 | 0-5 |

Vorzugsweise weist der trockene Lagerfugenmörtel 40 bis 95 M.-%, bevorzugt 70 bis 90, besonders bevorzugt 75 bis 85 M.-%, Bindemittelkomponente, bezogen auf die Trockenmasse des Lagerfugenmörtels auf.

Des Weiteren weist die Bindemittelkomponente vorzugsweise Zement, bevorzugt Portlandzement (CEM I) gemäß DIN EN 197-1:2011-11 und/oder Calciumsulfoaluminatzement, und/oder hydraulischen Kalk, und/oder Kalkhydrat und/oder einen puzzolanischen Zusatzstoff auf.

Portlandzement weist bekanntermaßen Portlandzementklinker und zumindest einen Erstarrungsregler, insbesondere Anhydrit und/oder Halbhydrat und/oder Gips auf. Calciumsulfoaluminatzement weist entsprechend Calciumsulfoaluminatzementklinker und zumindest einen solchen Erstarrungsregler auf. Werden andere Zemente gemäß DIN EN 197-1:2011-11 verwendet, die zusätzlich zum Portlandzement inerte Zusatzstoffe enthalten, werden diese Zusatzstoffe zu den inerten Zusatzstoffen gerechnet und nicht zum Bindemittelanteil.

Hydraulische Kalke enthalten zusätzlich zum Calciumhydroxid sogenannte Hydraulefaktoren, etwa Silikate (z. B. SiO₂), Aluminate (z. B. Al₂O₃) und Eisenoxide (z. B. Fe₂O₃) aus denen sich Calciumsilikate und Calciumaluminate bilden. Der hydraulische Anteil der Bindemittel kann auch unter Wasser aushärten, da kein Zutritt von Kohlendioxid notwendig ist.

Verdickungsmittel erhöhen die Viskosität der Lösungen, denen sie zugesetzt werden. Verdickungsmittel sind somit Stoffe, die in erster Linie in der Lage sind, Wasser zu binden. Durch Entzug von ungebundenem Wasser kommt es zur Erhöhung der Viskosität. Ab einer für jedes Verdickungsmittel charakteristischen Konzentration treten zu diesem Effekt noch Netzwerkeffekte auf, die zu einer meist überproportionalen Erhöhung der Viskosität führen.

Der Lagerfugenmörtel weist insgesamt (=Gesamtmenge an Polysaccharid-Verdickungsmittel) vorzugsweise 0,002 bis 1,5 M.-%, bevorzugt 0,003 bis 1,0 M.-% Polysaccharid-Verdickungsmittel, bezogen auf die Trockenmasse des Lagerfugenmörtels auf.

Bei dem Polysaccharid-Verdickungsmittel handelt es sich zudem vorzugsweise um Xanthan.

Vorzugsweise weist der Lagerfugenmörtel 0,002 bis 0,5 M.-%, bevorzugt 0,004 bis 0,1 M.-% Xanthan, bezogen auf die Trockenmasse des Lagerfugenmörtels auf.

Zudem weist der Lagerfugenmörtel vorzugsweise 0,2 bis 1,0 M.-%, bevorzugt 0,3 bis 0,8 M.-% Wasserretentionsmittel, vorzugsweise Celluloseether, bevorzugt Methylcellulose, bezogen auf die Trockenmasse des Lagerfugenmörtels als auf.

Der Lagerfugenmörtel weist insgesamt (=Gesamtmenge an mineralischem Verdickungsmittel) vorzugsweise 0,1 bis 2,0 M.-%, bevorzugt 0,2 bis 1,0 M.-%, mineralisches Verdickungsmittel, bezogen auf die Trockenmasse des Lagerfugenmörtels auf.

Das mineralische Verdickungsmittel besteht aus schichtförmigen, quellfähigen, bevorzugt aktivierten, Tonmineralen (Schichtsilikate). Vorzugsweise handelt es sich um, bevorzugt aktivierten, Bentonit und/oder Hectorit und/oder Smektit und/oder Montmorillonit.

Bekanntermaßen ist bei aktivierten Tonmineralen, insbesondere Bentonit, das Quell- und Bindevermögen durch Zugabe von Zusätzen, insbesondere von Soda oder Calciumionen, erhöht.

Das mineralische, anorganische, bevorzugt aktivierte, Verdickungsmittel kann natürlich oder synthetisch hergestellt sein.

Vorzugsweise weist der Lagerfugenmörtel 0,1 bis 1,0 M.-%, bevorzugt 0,2 bis 0,7 M.-% Bentonit, bezogen auf die Trockenmasse des Lagerfugenmörtels auf.

Des Weiteren weist der trockene Lagerfugenmörtel wie bereits erläutert zumindest einen Leichtzuschlagstoff, auf. Vorzugsweise beträgt die Gesamtmenge an Leichtzuschlagstoff(en) bzw. die Gesamtmenge an Leichtzuschlag 3 bis 25 M.-%, bevorzugt 5 bis 20 M.-%, bezogen auf die Trockenmasse des Lagerfugenmörtels.

Infolgedessen handelt es sich bei dem Lagerfugenmörtel um einen Leichtmauermörtel. Der Lagerfugenmörtel weist vorzugsweise ein Schüttgewicht gemäß DIN EN 459-2:2010-12 von 0,65 bis 1,0 kg/m³, bevorzugt von 0,7 bis 0,95 kg/m³, auf.

Vorzugsweise handelt es sich bei dem zumindest einen Leichtzuschlagstoff um geblähten Perlit oder geblähten Vermiculit oder Blähglas oder Hydrosilikate (geschäumtes Wasserglas) oder Blähton oder poröse Sande oder Aerogele oder Blähschiefer oder Bims oder Tuff oder Polysterol. Besonders bevorzugt weist der Lagerfugenmörtel aber ausschließlich mineralische Leichtzuschlagstoffe auf.

Besonders vorteilhaft ist eine Mischung aus geblähtem Vermiculit, geblähtem Perlite und Blähglas.

Des Weiteren kann der Lagerfugenmörtel Quarzsand als Zuschlagstoff aufweisen. Dieser dient dazu, die Mörtelmatrix zu stabilisieren.

Wie bereits erläutert, kann der trockene Lagerfugenmörtel zudem zumindest einen inaktiven bzw. inerten Zusatzstoff, vorzugsweise Kalksteinmehl und/oder Mikrohohlglaskugeln und/oder Quarzmehl und/oder Fasern, aufweisen. Besonders bevorzugt weist der trockene Lagerfugenmörtel Kalksteinmehl und Mikrohohlglaskugeln auf.

Die Mikrohohlglaskugeln weisen vorzugsweise einen d₅₀-Wert von 40 bis 60 µm, bevorzugt 45 bis 55 µm, bestimmt mittels Laserlichtbeugung gemäß ISO 13320:2020-01, und/oder einen d₉₀-Wert von 70 bis 90 µm, bevorzugt 75 bis 85 µm, bestimmt mittels Laserlichtbeugung gemäß ISO 13320:2020-01, auf.

Vorzugsweise weist der trockene Lagerfugenmörtel zudem 0 bis 15 M.-%, bevorzugt 1 bis 10 M.-%, inaktiven Zusatzstoff, bezogen auf die Trockenmasse des Lagerfugenmörtels auf. Die Fasern bestehen vorzugsweise aus Polyamid und/oder Carbon.

Vorzugsweise weist der trockene Lagerfugenmörtel folgende Bestandteile auf:

| | **[M.-%]** | **bevorzugt [M.-%]** |
|---|---|---|
| **Mineralisches Bindemittel, insbesondere Portlandzement und/oder Kalkhydrat** | 50-95 | 70-90 |
| **Leichtzuschlag** | 3-25 | 5-20 |
| **Mineralisches Verdickungsmittel** | 0,1-2,0 | 0,2-1,0 |
| **Polysaccharid-Verdickungsmittel** | 0,002-1,5 | 0,003-1,0 |
| **Inerte(n) Zusatzstoff(e), z.B. Kalksteinmehl und/oder Mikrohohlglaskugeln und/oder Fasern** | 0-15 | 1-10 |

Vorzugsweise weist der erfindungsgemäße Lagerfugenmörtel (ohne gegebenenfalls vorhandene Fasern) zudem folgende Korngrößenverteilung auf, ermittelt anhand des Siebdurchgangs gemäß DIN EN 933-10:2009-10 und DIN EN 1015-1:2007-05 (die einzelnen Komponenten addieren sich zu 100 M.-%):

| | **[M.-%]** | |
|---|---|---|
| **Korngrößen** | | **vorzugsweise** |
| **≤ 0,09 mm** | 70 - 98 | 80 - 97 |
| **> 0,09 - 0,2 mm** | 1 -20 | 1 - 10 |
| **> 0,2** - **0,63 mm** | 1 -25 | 2-16 |
| **> 0,63 -1,0 mm** | 0-15 | 0-10 |
| **> 1,0 mm** | 0-10 | 0-5 |

Der Lagerfugenmörtel weist (abgesehen von den gegebenenfalls vorhandenen Fasern) vorzugsweise eine maximale Korngröße ≤ 3 mm, auf. Der Lagerfugenmörtel ist also sehr feinkörnig, was besonders vorteilhaft ist. Denn dadurch kann der Lagerfugenmörtel in die Gitteröffnungen 13 des Geleges 10 eindringen, was nach der Aushärtung zu einer guten mechanischen Verkrallung des Geleges 10 in dem erhärteten Lagerfugenmörtel führt.

Insbesondere der Anteil und die Kornverteilung des Feinkornanteils des Lagerfugenmörtels in Kombination mit der Kornverteilung des Leichtzuschlags bewirkt die gute Einbindung des Geleges 10. Denn die feinen Körner umschließen das Gelege 10 besonders gut. Andererseits bewirken die feinen Leichtzuschlagkörner eine gute Elastizität des erhärteten Lagerfugenmörtels.

Durch die Oberflächenaktivität des Feinkornanteils und der Ausbildung eines entsprechenden Wasserfilms kann zudem durch ein gezieltes Wassermanagement ein optimaler Abbindeprozess der Bindemittelphase generiert werden.

Vorzugsweise weist der erfindungsgemäße Lagerfugenmörtel zudem eine Mörteldruckfestigkeit gemäß DIN EN 1015-11:2007-05 von 10 bis 20 N/mm², bevorzugt von 11 bis 15 N/mm², auf.

Vorzugsweise weist der erfindungsgemäße Lagerfugenmörtel eine Mörtelbiegefestigkeit gemäß DIN EN 1015-11:2007-05 von 2,0 bis 6,0 N/mm², bevorzugt von 2,2 bis 4,2 N/mm², auf.

Gleichzeitig weist der erfindungsgemäße Lagerfugenmörtel aufgrund des hohen Anteils an Leichtzuschlägen aber eine sehr geringe Wärmeleitfähigkeit λ₁₀ₜᵣ gemäß DIN EN 12664:2001-05 auf, vorzugsweise von 0,16 bis 0,21 W/(m K), bevorzugt von 0,18 bis 0,21 W/(m. K).

Wie bereits erläutert, wird aus dem erfindungsgemäßen trockenen Lagerfugenmörtel und dem erfindungsgemäßen Bewehrungstextil 9 eine Lagerfugenmörtelschicht 6 eines Mauerwerks 1 hergestellt.

Dazu wird zunächst vom jeweiligen Anwender ein Frischmörtel aus dem Lagerfugenmörtel hergestellt, wozu der Lagerfugenmörtel in an sich bekannter Weise mit Anmachwasser gemischt wird.

Der Lagerfugenmörtel liegt dabei als loses Schüttgut vor. Er wird vorzugsweise dabei als Sackware oder als Siloware in einem Bausilo bzw. Trockenmörtelsilo an den jeweiligen Einsatzort, insbesondere die Baustelle, geliefert.

Der durch Anmischen des erfindungsgemäßen Lagerfugenmörtels mit Wasser hergestellte Frischmörtel weist zudem vorzugsweise eine Frischmörtelrohdichte gemäß DIN EN 1015-6:2007-05 von 0,90 bis 1,35 kg/m³, bevorzugt von 0,95 bis 1,28 kg/m³, auf.

Zur Herstellung des Mauerwerks 1 wird nun eine erste Frischmörtelschicht auf eine erste Steinreihe 3 aufgetragen. Dies erfolgt z.B. in an sich bekannter Weise mittels eines Mörtelschlittens. Anschließend wird das Bewehrungstextil 9 auf die erste Frischmörtelschicht aufgelegt und vorzugsweise in diese eingedrückt. Das Bewehrungstextil 9 liegt dabei vorzugsweise als Rollenware vor. Es kann aber auch als Mattenware vorliegen. Die Rollenware hat den Vorteil, dass sich das Bewehrungstextil 9 in eine Lagerfugenlängsrichtung 5a durchgehend über mehrere Mauersteine 2, bevorzugt über die gesamte Steinreihe 3 erstreckt und somit einen durchgehenden Bewehrungsstrang bildet.

Zudem entspricht die Breite des Bewehrungstextils 9 dabei vorzugsweise der Breite der Mauersteine 2. Das Bewehrungstextil 9 erstreckt sich also in eine Lagerfugenlängsrichtung 5a über die gesamte Breite der Mauersteine 2

Das Bewehrungstextil 9 wird dabei zudem vorzugsweise so aufgelegt, dass sich die Kettfäden 11 in die Lagerfugenlängsrichtung 5a erstrecken. Die Schussfäden 12 sind entsprechend senkrecht zur Lagerfugenlängsrichtung 5a und erstecken sich in Lagerfugenquerrichtung 5b.

Das erfindungsgemäße Bewehrungstextil 9 gewährleistet dadurch auch die Aufnahme von Schubkräften.

Anschließend wird eine zweite Frischmörtelschicht auf das Bewehrungstextil 9 aufgebracht. Dies erfolgt wiederum z.B. in an sich bekannter Weise mittels eines Mörtelschlittens.

Danach wird eine weitere Steinreihe 3 auf die Frischmörtelschicht aufgelegt und vorzugsweise mit einigen Hammerschlägen fixiert. Dabei werden die einzelnen Mauersteine 2 auf Stoß, unter Ausbildung einer Stoßfuge 4, aneinandergesetzt.

Diese Herstellungsschritte werden so lange wiederholt, bis das Mauerwerk 1 fertig gestellt ist.

Dadurch, dass das Bewehrungstextil 9 vorzugsweise gitterartig ausgebildet ist, kann der Frischmörtel die Gitteröffnungen 13 durchdringen, so dass die erste und zweite Frischmörtelschicht miteinander verbunden werden und nach dem Erhärten die durchgehende, ausgehärtete Lagerfugenmörtelmatrix 8 bilden, in welche das Bewehrungstextil 9 eingebettet ist. Das Bewehrungstextil 9 ist somit mechanisch mit der Lagerfugenmörtelmatrix 8 verbunden.

Aufgrund der Gitteröffnungen 13 ist es auch möglich, lediglich eine einzige, nämlich die erste Frischmörtelschicht, aufzubringen. Das Bewehrungstextil 9 wird dann derart in die aufgetragene Frischmörtelschicht eingedrückt, dass Frischmörtel durch die Gitteröffnungen 13 nach oben durchdringt und nach dem Aufsetzen der nächsten Steinreihe 3 eine obere Frischmörtelschicht bildet. Dies ist besonders vorteilhaft, da ein zusätzlicher Herstellungsschritt entfällt.

Wie bereits erläutert wird vorzugsweise zudem eine Dünnbettmörtelschicht hergestellt. Das heißt, die Dicke der hergestellten, erhärteten Lagerfugenmörtelschicht beträgt vorzugsweise 0,5 bis 3 mm.

Im Rahmen der Erfindung wurde nun überraschenderweise herausgefunden, dass die erhärtete Lagerfugenmörtelschicht 6 eine hervorragende Biegezugfestigkeit des Mauerwerks 1 gewährleistet. Das bedeutet, dass die Anwendungsmöglichkeiten des Mauerwerks 1 in besonders zugfestigkeitsbeanspruchten Bauwerken möglich werden (u.a. Ersatz von energetisch ungünstigen Betonteilen).

Dies resultiert insbesondere auch aus dem guten Verbund zwischen der Lagerfugenmörtelmatrix 8 und dem Bewehrungstextil 9. Der gute Verbund wiederum resultiert zum einen aus der erfindungsgemäßen Polymer-Ausrüstung des Bewehrungstextils 9 sowie aus dem Gehalt an mineralischem und organischen Verdickungsmittel im trockenen Lagerfugenmörtel und dessen Kornverteilung.

Denn die erfindungsgemäße Polymer-Ausrüstung bzw. Imprägnierung führt zu einer höheren Oberflächenrauigkeit des Bewehrungstextils 9. Aufgrunddessen kann sich der erhärtete Lagerfugenmörtel mechanisch in der Oberfläche des Bewehrungstextils 9 verkrallen.

Und der Anteil und die Kornverteilung des Feinkornanteils des Lagerfugenmörtels in Kombination mit der Kornverteilung des Leichtzuschlags bewirkt die gute Einbindung des Geleges 10. Denn die feinen Körner umschließen das Gelege 10 besonders gut. Andererseits bewirken die feinen Leichtzuschlagkörner eine gute Elastizität des erhärteten Lagerfugenmörtels.

Es wird zudem vermutet, dass auch chemische Anlösungsprozesse dazu führen, dass sich der Lagerfugenmörtel, insbesondere aufgrund des enthaltenden Polysaccharid-Verdickungsmittels, bevorzugt des Xanthans, chemisch mit der Imprägnierung verbindet.

Zudem bewirkt insbesondere auch die Kombination der beiden Verdickungsmittel, dass der Frischmörtel ausreichend fließfähig ist, dass er in die Gitteröffnungen 13 des Geleges 10 hineinfließt, trotzdem aber noch eine deckelnde Wirkung hat und in den Gitteröffnungen 13 verbleibt, sobald er sich nicht mehr bewegt. Der Frischmörtel ist also thixotrop. Dies verbessert ebenfalls den Verbund zwischen Lagerfugenmörtel und dem Bewehrungstextil 9, wodurch die erfindungsgemäßen hohen Festigkeiten erreicht werden.

Insbesondere werden so hohe Festigkeiten erreicht, dass das erfindungsgemäße Mauerwerk Betonkonstruktionen ersetzen kann.

Insbesondere wurde erfindungsgemäß herausgefunden, dass das Bewehrungstextil 9 in die erste Frischmörtelschicht eingedrückt werden kann, ohne dass der Frischmörtel in die Hochlöcher 14 der Hochlochziegel 7 hineinfällt. Die Frischmörtelschicht bleibt somit auch nach dem Eindrücken deckelnd.

Im Rahmen der Erfindung liegt es zudem auch, dass es sich bei der Kombination aus Lagerfugenmörtel und Bewehrungstextil um eine Trockenmörtelplatte oder ein Trockenmörtelband analog der DE 10 2013 007 800 A1 handelt. In diesem Fall liegt der Lagerfugenmörtel nicht wie vorher beschrieben in loser bzw. schüttfähiger Form bzw. als loses Schüttgut getrennt vom Bewehrungstextil vor.

Die Trockenmörtelplatte weist zumindest eine Trockenmörtelschicht auf, die eine mittels eines wasserlöslichen Klebemittels verfestigte Trockenmörtelmischung aufweist, wobei die Trockenmörtelmischung aus dem Lagerfugenmörtel besteht. Zudem weist die Trockenmörtelplatte zumindest ein erfindungsgemä-ßes Bewehrungstextil auf, das zumindest einseitig mit zumindest einer derartigen Trockenmörtelschicht abgedeckt ist. Das Klebemittel verbindet die Bestandteile der Trockenmörtelmischung(en) miteinander und mit dem Bewehrungstextil.

Bei der Ausführung als Trockenmörtelplatte ist von Vorteil, dass durch eine qualitätssichere Einarbeitung des Bewehrungstextils ein signifikanter gezielter Zugfestigkeitsabtrag gewährleistet wird.

Abschließend wird darauf hingewiesen, dass alle genannten, insbesondere beanspruchten, Merkmale des Lagerfugenmörtels und/oder des Bewehrungstextils für sich genommen und in jeglicher Kombination besonders vorteilhaft und Gegenstand der vorliegenden Erfindung sind. Zudem sind die jeweils angegebenen Ober- und Untergrenzen der einzelnen Bereichsangaben erfindungsgemäß alle miteinander kombinierbar

Im Folgenden wird noch eine beispielhafte Rezeptur [M.-%] des erfindungsgemäßen Lagerfugenmörtels angegeben:

| **Ausführungsbeispiel** | | | |
|---|---|---|---|
| | **Hersteller/Typ** | **Anteil** | **Anteil** |
| | | **[kg/t]** | **[M.-%]** |
| | Portlandzement CEM I 42,5 R | 898 | 89,8 |
| | Perlite, 0 - 1 mm | 30 | 3,0 |
| | Quarzsand, 0 - 0,6 mm | 20 | 2 |
| | Kalksteinmehl, 0 - 0,09 mm | 20 | 2 |
| | Mikroglashohlkugeln, dso= 52µm, d₉₀=80 µm | 5 | 0,5 |
| | Vermiculite, 0 - 1 mm | 20 | 2 |
| | Stärkeether | 0,2 | 0,02 |
| | Schichtsilikat | 3 | 0,3 |
| | Fermentiertes Polysaccharid | 0,01 | 0,001 |
| | Celluloseether | 3 | 0,3 |
| | Zinnsulfat | 0,79 | 0,079 |
| **SUMME** | | **1000** | **100** |

Und der d₅₀-Wert des Feinkornanteils der Leichtstoffe des Lagerfugenmörtels beträgt 50 µm und der d₉₀-Wert des Feinkornanteils der Leichtstoffe des Lagerfugenmörtels beträgt 77 µm.

Des Weiteren beträgt die Menge des Feinkornanteils im Leichtstoffanteil 10 M.-%.

Zudem weist der Lagerfugenmörtel folgende Kornverteilung auf:

| | **[M.-%]** |
|---|---|
| **Korngrößen** | |
| **≤ 0,09 mm** | 92 |
| **> 0,09** - **0,2 mm** | 1,6 |
| **> 0,2** - **0,63 mm** | 5 |
| > **0,63** - **1,0 mm** | 1,3 |
| **> 1,0 mm** | 0,1 |

### Dieser Lagenfugenmörtel hat folgende Eigenschaften:

Der Lagerfugenmörtel weist eine Mörteldruckfestigkeit gemäß DIN EN 1015 - 11:2007 von 11,5 N/mm² sowie eine Wärmeleitfähigkeit λ₁₀ₜᵣ gemäß DIN EN 12664:2001-05 von 0,205 W/(m·K) auf.

Bei einem beispielhaften Bewehrungstextil handelt es sich um ein mit Polystyrol getränktes Gelege aus Multifilamentfäden aus Carbon mit folgenden Eigenschaften:

| **Ausführungsbeispiel** | |
|---|---|
| Maschenweite in Kettrichtung [mm] | 10 |
| Maschenweite in Schussrichtung [mm] | 10 |
| Fadenfeinheit [tex] | 800 |
| Bewehrungsquerschnitt 0° [mm²/m] | 32,25 |
| Bewehrungsquerschnitt 90° [mm²/m] | 35,25 |
| Fadenzugfestigkeit 0° [N/mm²] | 3320 |
| Fadenzugfestigkeit 90° [N/mm²] | 3775 |

Aus dieser Kombination wurde ein bewehrtes Mauerwerk hergestellt.

## Patentansprüche

1. Kombination aus einem werksseitig angemischten, trockenen, bevorzugt schüttfähigen, Lagerfugenmörtel und zumindest einem Bewehrungstextil (9) für die Herstellung einer bewehrten Lagerfugenmörtelschicht (6) eines bewehrten Mauerwerks (1),
wobei der Lagerfugenmörtel
a) eine Bindemittelkomponente mit zumindest einem mineralischen, insbesondere hydraulischen, Bindemittel, vorzugsweise in einer Menge von 40 bis 95 M.-%, bevorzugt 70 bis 90 M.-%, besonders bevorzugt 75 bis 85 M.-%,
b) einen Leichtstoffanteil mit zumindest einem, bevorzugt mineralischen, Leichtzuschlagstoff,
c) zumindest ein Polysaccharid-Verdickungsmittel, vorzugsweise in einer Gesamtmenge an Polysaccharid-Verdickungsmittel von 0,002 bis 1,5 M.-%, bevorzugt 0,003 bis 1,0 M.-%, und
d) zumindest ein mineralisches Verdickungsmittel, vorzugsweise in einer Gesamtmenge an mineralischem Verdickungsmittel von 0,1 bis 2,0 M.-%, bevorzugt 0,2 bis 1,0 M.-%,
aufweist,
**dadurch gekennzeichnet, dass**
das Bewehrungstextil (9) ein Gelege (10) oder ein Gewebe aus Carbon ist und eine Imprägnierung aus einem Polymer aufweist,
und der Leichtstoffanteil einen Feinkornanteil mit einer Korngröße ≤ 90 µm aufweist, wobei der Feinkornanteil des Leichtstoffanteils
- einen d₅₀-Wert von 35 bis 60 µm, bevorzugt von 40 bis 55 µm, bestimmt mittels Laserlichtbeugung gemäß ISO 13320:2020-01,
und/oder
- einen d₉₀-Wert von 65 bis < 90 µm, vorzugsweise von 65 bis 89 µm, besonders bevorzugt von 70 bis 85 µm, bestimmt mittels Laserlichtbeugung gemäß ISO 13320:2020-01,
aufweist.

2. Kombination nach Anspruch 1,
**dadurch gekennzeichnet, dass**
a) die Menge des Feinkornanteils im Leichtstoffanteil, bestimmt durch Absiebung mittels Luftstrahlsiebung gemäß DIN EN 933-10:2009-10, 1 bis 20 M.-%, bevorzugt 3 bis 18 M.-%, beträgt,
und/oder
b) die Menge des Leichtstoffanteils im Lagerfugenmörtel 3 bis 25 M.-%, bevorzugt 5 bis 20 M.-% beträgt,
und/oder
c) der Feinkornanteil des Lagerfugenmörtels einen d₅₀-Wert von 7 bis 20 µm, bevorzugt 10 bis 18 µm, besonders bevorzugt von 11 bis 15 µm, bestimmt mittels Laserlichtbeugung gemäß ISO 13320:2020-01, und/oder einen d₉₀-Wert von 25 bis 55 µm, bevorzugt 28 bis 50 µm, besonders bevorzugt von 30 bis 45 µm, bestimmt mittels Laserlichtbeugung gemäß ISO 13320:2020-01, aufweist,
und/oder
d) die Menge des Feinkornanteils in dem Lagerfugenmörtel, bestimmt durch Absiebung mittels Luftstrahlsiebung gemäß DIN EN 933-10:2009-10, 75 bis 96 M.-%, bevorzugt 78 bis 95 M.-%, beträgt.

3. Kombination nach einem der vorhergehenden Ansprüche,
**dadurch gekennzeichnet, dass**
a) der Leichtzuschlag des Lagerfugenmörtels eine Korngröße ≤ 3 mm, bevorzugt ≤ 2 mm, besonders bevorzugt ≤ 1 mm, ermittelt anhand des Siebdurchgangs gemäß DIN EN 933-10:2009-10 und DIN EN 1015-1:2007-05, aufweist,
und/oder
b) es sich bei dem zumindest einen Leichtzuschlagstoff um geblähten Perlit oder geblähten Vermiculit oder Blähglas oder Hydrosilikate oder Blähton oder einen porösen Sand oder Aerogel oder Blähschiefer oder Bims oder Tuff oder Polysterol handelt, wobei der Lagerfugenmörtel vorzugsweise geblähten Vermiculit und/oder geblähten Perlit und/oder Blähglas aufweist,
und/oder
c) der Leichtstoffanteil ausschließlich mineralische Stoffe aufweist,
und/oder
d) der Leichtstoffanteil als Zusatzstoff Mikrohohlglaskugeln aufweist, wobei die Mikrohohlglaskugeln vorzugsweise einen d₅₀-Wert von 40 bis 60 µm, bevorzugt 45 bis 55 µm, bestimmt mittels Laserlichtbeugung gemäß ISO 13320:2020-01, und/oder einen d₉₀-Wert von 70 bis 90 µm, bevorzugt 75 bis 85 µm, bestimmt mittels Laserlichtbeugung gemäß ISO 13320:2020-01, aufweisen.

4. Kombination nach einem der vorhergehenden Ansprüche,
**dadurch gekennzeichnet, dass**
a) das Bewehrungstextil (9) eine Dicke von 0,04 bis 1,0 mm, bevorzugt 0,06 bis 0,5 mm, aufweist,
und/oder
b) das Bewehrungstextil (9), insbesondere das Gelege (10), eine Gitterstruktur mit Gitteröffnungen (13) aufweist,
wobei das Bewehrungstextil (9) vorzugsweise eine Gitteröffnungsbreite von 3 bis 50 mm, bevorzugt 6 bis 15 mm, in Kettrichtung (11a) und/oder eine Gitteröffnungsbreite von 3 bis 50 mm, bevorzugt 6 bis 15 mm, in Schussrichtung (12a) aufweist,
und/oder
c) das Gelege (10) Gelegefäden (11;12) mit einem abgeflachten Querschnitt aufweist.

5. Kombination nach einem der vorhergehenden Ansprüche,
**dadurch gekennzeichnet, dass**
a) der Lagerfugenmörtel Xanthan als Polysaccharid-Verdickungsmittel aufweist, vorzugsweise in einer Menge von 0,002 bis 0,5 M.-%, bevorzugt von 0,004 bis 0,1 M.-%,
und/oder
b) der Lagerfugenmörtel 0,1 bis 2,0 M.-%, bevorzugt 0,2 bis 1,0 M.-%, mineralisches Verdickungsmittel aufweist,
und/oder
c) es sich bei dem mineralischen Verdickungsmittel um ein schichtförmiges, quellfähiges, bevorzugt aktiviertes, Tonmineral, bevorzugt um aktivierten, Bentonit und/oder Hectorit und/oder Smektit und/oder Montmorillonit, handelt,
und/oder
d) der Lagerfugenmörtel 0,1 bis 1,0 M.-%, bevorzugt 0,2 bis 0,7 M.-%, bevorzugt aktivierten, Bentonit aufweist.

6. Kombination nach einem der vorhergehenden Ansprüche,
**dadurch gekennzeichnet, dass**
a) der Lagerfugenmörtel 0,2 bis 1,0 M.-%, bevorzugt 0,3 bis 0,8 M.-%, Wasserretentionsmittel, vorzugsweise Celluloseether, bevorzugt Methylcellulose, aufweist,
und/oder
b) die Bindemittelkomponente Zement, bevorzugt Portlandzement und/oder Calciumsulfoaluminatzement, und/oder hydraulischen Kalk, und/oder Kalkhydrat und/oder einen puzzolanischen Zusatzstoff aufweist,
und/oder
c) der Lagerfugenmörtel ein Schüttgewicht gemäß DIN EN 459-2:2021-09 von 0,65 bis 1,0 kg/m³, bevorzugt von 0,7 bis 0,95 kg/m³, aufweist.

7. Kombination nach einem der vorhergehenden Ansprüche,
**dadurch gekennzeichnet, dass**
die Imprägnierung aus einer erhärteten Polymerdispersion, vorzugsweise aus Polystyrol und/oder Styrolbutadien-Kautschuk und/oder Acrylat, oder aus einem, bevorzugt duroplastisches und/oder bio-basiertes, Kunstharz, vorzugsweise aus Epoxidharz und/oder Vinylesterharz und/oder Polyurethanharz und/oder Acrylharz, besteht,
wobei die erhärtete Polymerdispersion vorzugsweise aus einem bio-basierten Polymer und/oder einem Thermoplast besteht.

8. Kombination nach einem der vorhergehenden Ansprüche,
**dadurch gekennzeichnet, dass**
der Lagerfugenmörtel eine maximale Korngröße ≤ 3 mm, ermittelt anhand des Siebdurchgangs gemäß DIN EN 1015-1:2007-05, aufweist.

9. Kombination nach einem der vorhergehenden Ansprüche,
**dadurch gekennzeichnet, dass**
a) der Lagerfugenmörtel eine Mörteldruckfestigkeit gemäß DIN EN 1015-11:2007-05 von 10 bis 20 N/mm², bevorzugt von 11 bis 15 N/mm², aufweist,
und/oder
b) der Lagerfugenmörtel eine Mörtelbiegefestigkeit gemäß DIN EN 1015-11:2007-05 von 2,0 bis 6,0 N/mm², bevorzugt von 2,2 bis 4,2 N/mm², aufweist,
und/oder
c) der Lagerfugenmörtel eine Wärmeleitfähigkeit λ₁₀ₜᵣ gemäß DIN EN 12664:2001-05 auf, vorzugsweise von 0,16 bis 0,21 W/(m·K), bevorzugt von 0,18 bis 0,21 W/(m·K), aufweist.

10. Kombination nach einem der vorhergehenden Ansprüche,
**dadurch gekennzeichnet, dass**
a) das Bewehrungstextil (9) ein Flächengewicht von 10 bis 1000 g/m², bevorzugt 100 bis 350 g/m², gemäß DIN EN 12127:1997-12 aufweist,
und/oder
b) das Bewehrungstextil (9) einen Bewehrungsquerschnitt von 8 bis 140 mm²/m, bevorzugt 15 bis 70 mm²/m, in eine Kettrichtung (11a) und/oder einen Bewehrungsquerschnitt von 8 bis 140 mm²/m, bevorzugt 15 bis 70 mm²/m, in eine Schussrichtung (12a) aufweist.

11. Kombination nach einem der vorhergehenden Ansprüche,
**dadurch gekennzeichnet, dass**
a) das Bewehrungstextil (9) ein Gelege ist und Gelegefäden (11;12) aufweist, wobei die Gelegefäden (11;12) einen von einem runden Querschnitt abweichenden Querschnitt, vorzugsweise einen flach rechteckigen oder elliptischen Querschnitt, aufweisen,
und/oder
b) das Bewehrungstextil (9) ein Gelege ist und sich in eine Kettrichtung (11a) erstreckenden Gelegefäden (11) und sich in eine Schussrichtung (12a) erstreckenden Gelegefäden (12) aufweist, wobei die sich in Kettrichtung (11a) erstreckenden Gelegefäden (11) eine Zugfestigkeit von 500 bis 6000 N/mm², bevorzugt von 2500 bis 3800 N/mm² aufweisen und/oder die sich in Schussrichtung (12a) erstreckenden Gelegefäden (12) eine Zugfestigkeit von 500 bis 6000 N/mm², bevorzugt von 2500 bis 3800 N/mm² aufweisen,
und/oder
c) das Bewehrungstextil (9) ein biaxial ausgebildetes Gelege ist.

12. Kombination nach einem der vorhergehenden Ansprüche,
**dadurch gekennzeichnet, dass**
die Kombination eine Trockenmörtelplatte oder ein Trockenmörtelband ist, aufweisend zumindest eine Trockenmörtelschicht, die eine mittels eines wasserlöslichen Klebemittels verfestigte, aus dem Lagerfugenmörtel bestehende, Trockenmörtelmischung aufweist, wobei das Bewehrungstextil zumindest einseitig, bevorzugt beidseitig mit der Trockenmörtelschicht abgedeckt ist.

13. Bewehrte Lagerfugenmörtelschicht (6) eines bewehrten Mauerwerks (1), wobei die Lagerfugenmörtelschicht (6) eine Lagerfugenmörtelmatrix (8) aus einem hydratisierten Lagerfugenmörtel und ein in die Lagerfugenmörtelmatrix (8) eingebettetes Bewehrungstextil (9) aufweist,
**dadurch gekennzeichnet, dass**
die Lagerfugenmörtelschicht (6) aus der Kombination gemäß einem der vorhergehenden Ansprüche hergestellt ist,
wobei die Lagerfugenmörtelschicht (6) vorzugsweise eine, bevorzugt deckelnde, Dünnbettmörtelschicht ist.

14. Bewehrtes Mauerwerk (1), aufweisend mehrere übereinander angeordnete Steinreihen (3) aus jeweils mehreren nebeneinander angeordneten Mauersteinen (2;7), wobei zwischen zwei übereinander angeordneten Steinreihen (3) jeweils eine Lagerfuge (5) vorhanden ist und die übereinander angeordneten Steinreihen (3) mittels einer in der Lagerfuge (5) angeordneten Lagerfugenmörtelschicht (6) miteinander vermörtelt sind, **dadurch gekennzeichnet, dass**
die Steinreihen (3) mittels einer Lagerfugenmörtelschicht (6) gemäß Anspruch 13 miteinander vermörtelt sind,
wobei es sich bei den Mauersteinen (2) vorzugsweise um Plansteine, bevorzugt Planlochsteine, insbesondere um Ziegel, ganz besonders bevorzugt um Hochlochziegel (7) mit Hochlöchern (14), und/oder um Kalksandsteine und/oder um Kalkblocksteine und/oder um Betonsteine und/oder Porenbetonsteine und/oder Leichtbetonsteine handelt.

15. Verwendung einer Kombination gemäß einem der Ansprüche 1 bis 12 zur Herstellung einer bewehrten Lagerfugenmörtelschicht (6) eines bewehrten Mauerwerks (1).

16. Verfahren zur Herstellung einer bewehrten Lagerfugenmörtelschicht (6) eines aus mehreren übereinander angeordneten Steinreihen (3) aus Mauersteinen (2) bestehenden bewehrten Mauerwerks (1), insbesondere eines Mauerwerks (1) nach Anspruch 14, aus einer Kombination gemäß einem der Ansprüche 1 bis 12 mit folgenden Verfahrensschritten:
a) Herstellung eines Frischmörtels aus dem trockenen Lagerfugenmörtel und Wasser,
b) Auftragen einer Frischmörtelschicht aus dem Frischmörtel auf eine erste Steinreihe (3),
c) Auflegen des Bewehrungstextils (9) auf die Frischmörtelschicht und vorzugsweise Eindrücken des Bewehrungstextils (9) in die Frischmörtelschicht,
d) Vorzugsweise Aufbringen einer weiteren Frischmörtelschicht aus dem Frischmörtel auf das Bewehrungstextil (9),
e) Aufbringen einer weiteren Steinreihe (3) auf die noch nicht erhärtete Lagerfugenmörtelschicht (6),
f) Erhärten lassen des Frischmörtels der Lagerfugenmörtelschicht (6).

17. Verfahren zur Herstellung eines bewehrten Mauerwerks (1), aufweisend mehrere übereinander angeordnete Steinreihen (3) aus jeweils mehreren nebeneinander angeordneten Mauersteinen (2;7), wobei zwischen zwei übereinander angeordneten Steinreihen (3) jeweils eine Lagerfuge (5) vorhanden ist und die übereinander angeordneten Steinreihen (3) mittels einer in der Lagerfuge (5) angeordneten Lagerfugenmörtelschicht (6) miteinander vermörtelt sind, insbesondere eines Mauerwerks (1) nach Anspruch 14,
**dadurch gekennzeichnet, dass**
die Lagerfugenmörtelschichten (6) gemäß Anspruch 16 hergestellt werden.
